Europäisches Patentamt

European Patent Office

Office européen des brevets

(11) Veröffentlichungsnummer: **0 388 671**
**A2**

## (12) EUROPÄISCHE PATENTANMELDUNG

(21) Anmeldenummer: **90103886.9**

(22) Anmeldetag: **28.02.90**

(51) Int. Cl.⁵: **B60G 17/015, G01P 3/52**

(30) Priorität: **21.03.89 DE 3909190**

(43) Veröffentlichungstag der Anmeldung:
**26.09.90 Patentblatt 90/39**

(84) Benannte Vertragsstaaten:
**BE DE ES FR GB IT NL SE**

(71) Anmelder: **AUGUST BILSTEIN GMBH & CO KG**
**August-Bilstein-Strasse, Postfach 1151**
**D-5828 Ennepetal(DE)**

(72) Erfinder: **Herberg, Gerhard, Dipl.-Ing.**
**Weberstrasse 2**

**D-5750 Menden 2(DE)**
Erfinder: **Hoffmann, Hans Jürgen**
**Herichhausen 18h**
**D-5600 Wuppertal 12(DE)**
Erfinder: **Gesenhues, Ludger, Dipl.-Ing.**
**Adlerstrasse 21**
**D-4600 Dortmund 1(DE)**
Erfinder: **Huang, Zhen, Dipl.-Ing.**
**Kleverplatz 6**
**D-5600 Wuppertal 1(DE)**
Erfinder: **Hölscher, Reinhard, Dr.-Ing.**
**Kottenstrasse 25**
**D-4796 Salzkotten(DE)**

(54) **Schwingungsdämpfersensor für ein semiaktivgeregeltes Fahrwerk mit Relativgeschwindigkeitssensor und Elektronik zu dessen Verarbeitung.**

(57) Die Erfindung betrifft ein Schwingungsdämpfersensor für ein semiaktivgeregeltes Fahrwerk eines Kraftfahrzeuges, in dem die Relativgeschwindigkeit zwischen Radmasse und Aufbaumasse mit einer Sensorwicklung und einem Dauermagneten gemessen und in einer Auswerteschaltung verarbeitet wird.

Fig. 1

EP 0 388 671 A2

## Schwingungsdämpfersensor für ein semiaktivgeregeltes Fahrwerk mit Relativgeschwindigkeitssensor und Elektronik zu dessen Verarbeitung

Die Erfindung bezieht sich auf ein Schwingungsdämpfersensor zur Messung der Relativgeschwindigkeit zwischen dem Aufbau eines Kraftfahrzeuges und der betreffenden Achse. Das Bindeglied, welches die Schwingungen von der Fahrbahnoberfläche, übertragen durch das Rad-Federsystem, auf die Karosserie mehr oder weniger überträgt, ist in der Regel ein Schwingungsdämpfer. Hier werden insbesondere hydraulische, regelbare Schwingungsdämpfer eingesetzt.

Regelbare Stoßdämpfer sind mit der DE OS 35 35 287 bekannt geworden, wobei der Regelvorgang über eine elektronische Schaltung vorgenommen wird, die auf den Elektromagneten eines Ventiles einwirkt.

Mit der DE OS 27 38 455 ist ein Verfahren zur Messung der Relativgeschwindigkeit bekannt geworden. Es handelt sich hierbei um ein Mehrgrößenregelsystem, welches über sogenannte Störgrößenbe obachter unter anderem auch die Relativgeschwindigkeit des Schwingungsdämpfers erfaßt und über ein kompliziertes elektrohydraulisches Servozylindersystem regelt.

Eine weitere Möglichkeit, den Betriebszustand eines Schwingungsdämpfers in einer Radaufhängung ohne Verwendung einer besonderen ortsfesten Prüfeinrichtung zu erfaßen und zu verarbeiten, ist mit der DE-OS 33 16 011 bekannt geworden.

Die DE-PS 35 18 503 beschreibt ein Steuersystem, welches verschiedene Signale, unter anderem auch die Aufbaubeschleunigung, mißt, und aus diesen Signalen die Höhen der Fahrbahnunebenheiten rechnerisch bestimmt. Es soll damit erreicht werden, daß die Dämpfer praktisch unter allen denkbaren Fahrbahnbedingungen optimal eingestellt werden können.

Der DE-OS 35 36 201 ist eine Einrichtung zur Erfassung der relativen Position von zwei zueinander bewegbaren Teilen für eine Höhenstandsmessung zu entnehmen. Bei diesem Anmeldungsgegenstand wird das magnetische Feld eines Dauermagneten gestört. Auch die DE-OS 35 22 010 beschreibt einen Wegsensor, der nach dem gleichen Prinzip arbeitet und auch für Höhenregulierungen verwendet wird, so auch die DE-OS 35 38 349.

Das Gebrauchsmuster DE-G 85 24 086 offenbart einen Sensor, der mit zwei Wicklungen versehen ist, wobei zumindest eine der Wicklungen mit einer externen Speisespannung versorgt werden muß.

In der DE-OS 23 03 104 wird ein Beschleunigungssensor beschrieben, welcher eine Spule in einem magnetischen Feld eines Magneten bewegt.

Darüber hinaus sind Verfahren bekannt geworden, bei denen über spezielle Wegsensoren der Arbeitshub des Stoßdämpfers gemessen wird. Diese Sensoren liefern aber nicht direkt ein Geschwindigkeitssignal, d. h., das Wegsignal muß erst noch differenziert werden, um das Geschwindigkeitssignal zu bekommen.

Die Aufgabe der Erfindung ist es, ohne spezielle aufwendige und teure Sensoren, die Relativgeschwindigkeit an einem Fahrzeug zwischen der Aufbaumasse und der Radmasse nach Betrag und Richtung zu messen, um die Fahrsicherheit und den Fahrkomfort eines Straßenfahrzeuges zu steigern. Ferner soll es sich um ein aktives Bauteil handeln.

Die Aufgabe wird dadurch gelöst, daß an dem Schwingungsdämpfer, der sich zwischen der Aufbaumasse und der Radmasse befindet, die Relativgeschwindigkeit in der Form gemessen wird, in dem auf dem feststehenden Teil des Dämpfungszylinders ein Dauermagnet befestigt wird und sich in der beweglichen Abdeckung eine Sensorwicklung befindet. Bei einer ausgeführten Schwingung wird durch den magnetischen Fluß des Dauermagneten in der bewegten Sensorwicklung ein Spannungssignal nach Betrag und Richtung erzeugt, welches proportional zur Relativgeschwindikeit ist. Durch diese preiswerte Maßnahme ist es möglich, die Relativgeschwindigkeit sehr genau zu messen ohne das Spannungssignal zu differentieren bzw. integrieren zu müssen. Eine anschließende Auswerteschaltung erzeugt ein Regelsignal, welches an ein im Schwingungsdämpfer befindliches elektromagnetisches Ventil weitergegeben wird und so der Regelkreis geschlossen ist.

Der gesamten Regelphilosophie liegt das sogenannte Skyhookprinzip zu Grunde.

Die Zeichnungen geben schematisch den Erfindungsgegenstand in verschiedenen Ausführungen wieder:

Es zeigt:

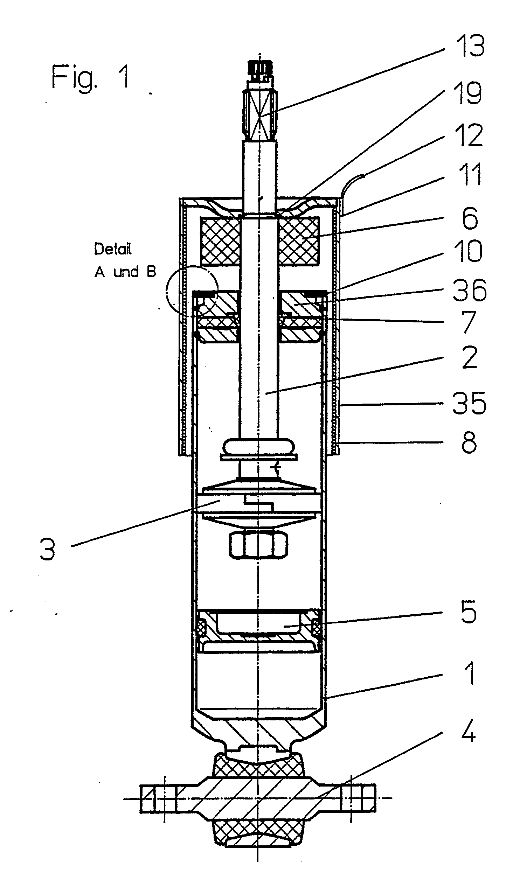

Fig. 1 Schwingungsdämpfer mit in der Abdeckung enthaltenen Sensorwicklung und Dauermagnet auf dem Dämpfungszylinder

Fig. 2 Detail A mit Sensorwicklung und Dauermagnet mit Zwischenlage

Fig. 3 Detail B mit Sensorwicklung und Dauermagnetsystem

Fig. 4 Mit einer auf dem Dämpfungszylinder aufgebrachten Sensorwicklung und einem in der Abdeckung enthaltenen Magneten

Fig. 5 Mit einer auf dem Dämpfungszylinder aufgebrachten Sensorwicklung und einem an der beweglichen Kolbenstange befestigten Magneten

Fig. 6 elektronische Auswerteschaltung

Ein Fahrzeug besteht vereinfacht dargestellt aus zwei Massen, nämlich der Aufbaumasse und der Radmasse. Zwischen diesen beiden Massen befindet sich eine Feder und ein Schwingungsdämpfer. Der Schwingungsdämpfer ist so befestigt, daß der Dämpfungszylinder (1) über eine formschlüssige Verbindung (4) mit der Radmasse verbunden ist, d. h. der Dämpfungszylinder (1) stellt den beweglichen Teil des Systemes dar. Diese Betrachtungsweise ist relativ, da sich bei einem solchen Schwingungsdämpfer durchaus auch die Abdeckung (35) bewegen kann. Zum besseren Verständnis soll bei den weiteren Betrachtungsweisen der Dämpfungszylinder (1) beweglich sein und die an der Kolbenstange (2) befestigte Abdeckung (35) feststehen. Über die Befestigung (13) wird die Kolbenstange (2) mit der Aufbaumasse formschlüssig verbunden.

Bei dem Schwingungsdämpfer handelt es sich um einen hydraulischen, regelbaren Dämpfer, der für die Erfindung im wesentlichen wie folgt aufgebaut ist.

In einem Dämpfungszylinder (1), der durch einen Führungsverschluß (36) verschlossen ist, befinden sich zwei Arbeitsräume, die durch einen Trennkolben (5) getrennt werden. Unterhalb des Trennkolbens (5) be findet sich ein gasgefüllter Ausgleichsraum, welcher zur Kompensation der Volumenzu- bzw. -abnahme in dem hydraulischen Arbeitsraum befindliche Kolbenstange (2) durch das einfahrende bzw. ausfahrende Eigenvolumen der Kolbenstange (2) dient. In dem größeren Arbeitsraum oberhalb des Trennkolbens (5) befindet sich ein Kolben (3) festverbunden mit einer beweglichen Kolbenstange (2), die durch den Führungsverschluß (36) hindurch geht und von der Dichtung (7) abgedichtet wird. In dem Dämpfungszylinder (1) befindet sich oberhalb des Trennkolbens (5) ein hydraulisches Medium. Auf der Verschlußkappe (36) ist ein Dauermagnet (10) befestigt.

Außerhalb des Dämpfungszylinders (1) befindet sich an der Kolbenstange (2) über die Verbindung (19) eine Abdeckung, welche aus einem Schutzrohr (35) besteht. Die Abdeckung (35) ist so ausgebildet, daß sie einseitig offen und über den Dämpfungszylinder (1) gestülpt ist. In der Abdeckung (35) befindet sich eingebettet eine Sensorwicklung (8), die sich über die gesamte Länge der Abdeckung erstrecken kann. Das Material der Abdeckung (35) muß antimagnetisch sein. Es ist daher möglich, die Sensorwicklung als Luftspule zu wickeln und nachher mit Kunststoff zu umspritzen. Zwischen dem Dauermagneten (10) und der Sensorwicklung (8) ist ein Luftspalt. Wird nun aufgrund einer Fahrbahnunebenheit der Dämpfungszylinder (1) nach oben gedrückt, so bewegt sich der Dauermagnet (10) innerhalb der ihm umgebenden Sensorwicklung (8) nach oben. Die von dem Dauermagneten (10) ausgehenden magnetischen Kraftlinien werden von der Sensorwicklung (8) geschnitten und es wird in der Sensorwicklung (8) aufgrund des Induktionsprinzipes eine Spannung induziert. Dieses Spannungssignal ist proportional zur Geschwindigkeit und damit ein Maß für die Relativgeschwindigkeit.

Der Erfindungsgegenstand erfüllt somit nicht nur seine Funktion der Abdeckung der Kolbenstange, sondern liefert auch auf preisgünstige Weise eine elektrische Spannung, welche die Relativgeschwindigkeit wiederspiegelt.

Die Anschlüsse (12) der Sensorwicklung (8) können direkt weitergeführt werden, doch ist es servicefreundlicher, wenn über eine wasserdichte Steckverbindung (11) der Anschluß (12) an die Auswerteelektronik weitergeführt wird.

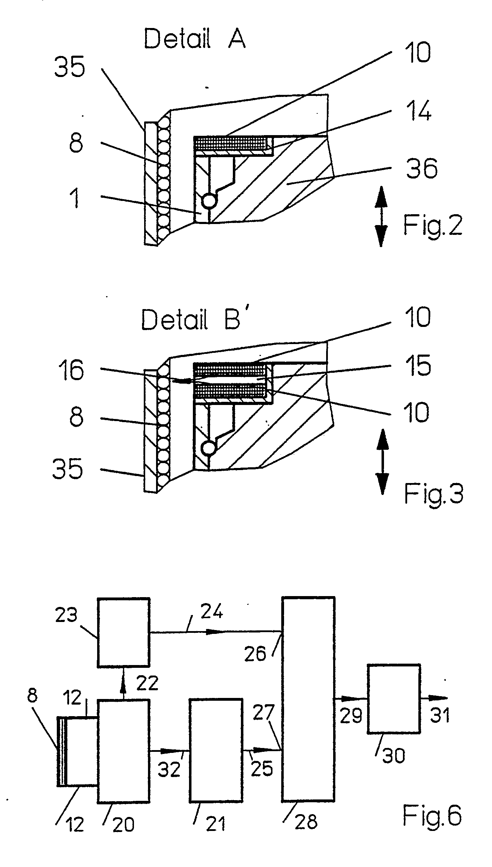

In Ausgestaltung der Erfindung kann es sinnvoll sein, daß der Dauermagnet (10) nicht direkt auf der Verschlußkappe (36) sitzt, sondern daß sich zwischen der Führungsverschlußkappe (36) und dem Dauermagneten (10) eine antimagnetische Zwischenlage (14) befindet, die verhindert, daß die Magnetkraft durch das Eisen des Dämpfungszylinders (1) geschwächt wird. Dieser Aufbau ist in Figur 2 dargestellt. Bei einem Dämpfungszylinder (1) aus einem antimagnetischen Material, kann die Zwischenlage (14) unter Umständen fehlen.

Eine Erhöhung und gleichzeitige Verstärkung der Magnetkraft ist zu erzielen, wenn ein Magnetsystem wie in Figur 3 gezeigt wird, aufgebaut wird. Das Magnetsystem besteht aus zwei axial magnetisierten Dauermagneten (10), die mit ihren gleichnamigen Polen zueinander stehen. Dazwischen ist ein Polschuh (15) aus ferromagnetischem Eisen. Die abstoßenden Magnetkräfte treffen auf das Eisen und werden quasi nach außen gelenkt (16). Durch diese Maßnahme wird der magnetische Fluß selektiv auf die Sensorwicklung (8) gerichtet und erhöht dadurch das elektrische Spannungssignal.

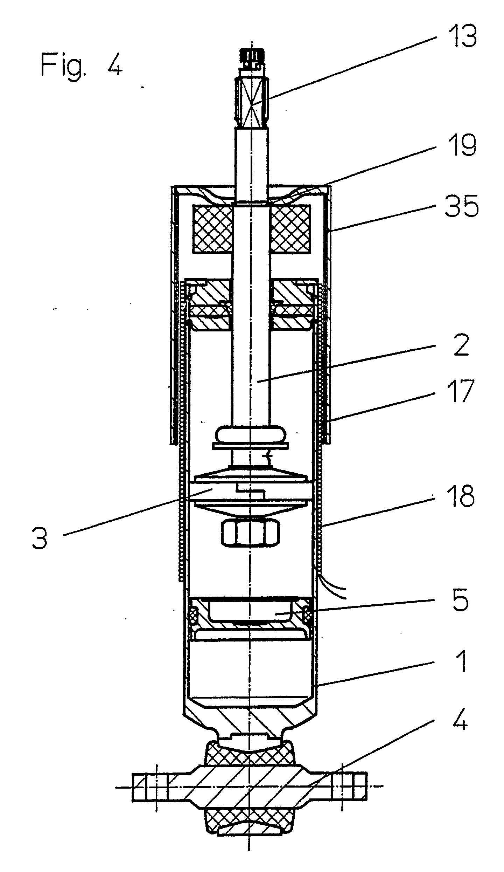

Die Figur 4 zeigt einen Schwingungsdämpfer, der entgegengesetzt aufgebaut ist. In diesem Falle ist auf dem Dämpfungszylindergehäuse (1) außen eine Sensorwicklung aufgewickelt und zum Schutz gegen äußere Einflüsse mit einem Dielektrikum eingegossen worden. Die Abdeckung (35) ist in diesem Falle mit einer Dauermagnetschicht (17) versehen worden. Aufgrund des gleichen Induktionsprinzipes wird bei einer Bewegung des Systemes in der Sensorwicklung eine der Relativgeschwindigkeit proportionale Spannung induziert.

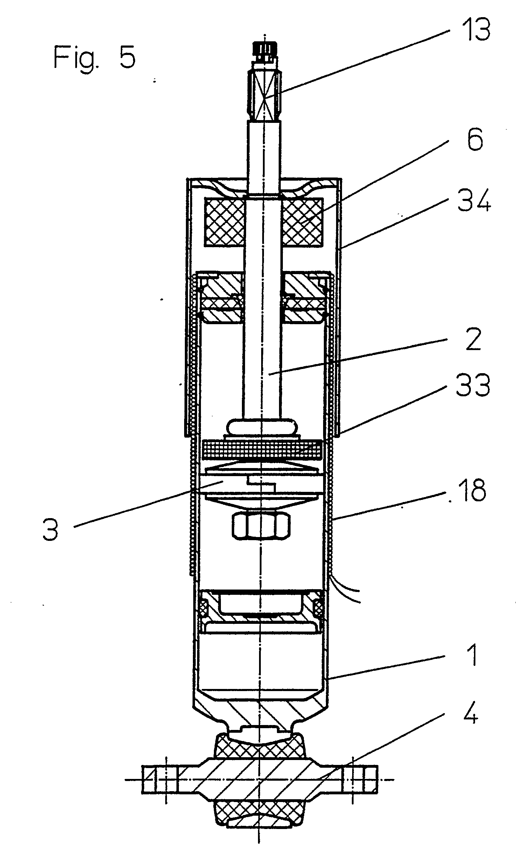

Eine weitere Ausgestaltung der Erfindung ist in Figur 5 dargestellt. Auch in diesem Falle liegt die Sensorwicklung (18) wieder außen auf dem Dämpfungszylinder (1). Für diesen Anwendungsfall ist es aber wichtig, daß der Dämpfungszylinder aus einem antimagnetischen Werkstoff z. B. Aluminium besteht. Der Dauermagnet (33) zur Erzeugung der Induktionsspannung befindet sich in dem Dämpfungszylinder (1). Er kann z. B. vor dem Kolben (3) unlösbar auf der Kolbenstange (2) mit befestigt werden. Die Abdeckung (34) hat in diesem Falle nur ihre reine Schutzfunktion wahrzunehmen. Auch in diesem Falle wird bei einer Bewegung des Schwingungsdämpfers ein elektrisches Spannungssignal erzeugt, welches proportional zur Relativgeschwindigkeit ist.

Um die Relativgeschwindigkeit zwischen der Aufbaumasse und der Radmasse semiaktiv zu regeln, wird auch noch die Aufbaugeschwindigkeit benötigt, die nach bekannten Methoden ermittelt wird.

Das, entsprechend der Geschwindigkeit, zwischen Aufbaumasse und Radmasse induzierte Spannungssignal wird über den Anschluß (12) an ein Filter (20) weitergeleitet. Die Aufgabe des Filters ist es Störgrößen auszufiltern. Gleichzeitig wird über die Verbindung (22) das Meßsignal an eine Fehlererkennungsschaltung (23) weitergeleitet. Kabelbrüche oder zu hohe Übergangswiderstände werden hier erkannt und über die Leitung (24) an den Eingang (26) des Mikroprozessors (28) zur Abschaltung der Anlage und/oder aber zur Fehleranzeige ans Armaturenbrett weitergeleitet.

Das verwertbare gefilterte Meßsignal geht vom Filter (20) über die Verbindung (32) in eine Verstärkerschaltung (21). Dieses verstärkte Meßsignal kann nun über die Verbindung (25) dem Eingang (27) des Mikroprozessors (28) zugeführt werden.

Die Auswertung der Meßsignale wird im Mikroprozessor (28) vorgenommen, wo auch die nicht dargestellte Aufbaugeschwindigkeit anliegt.

Wenn z. B. die Radmasse schneller nach oben bewegt wird als die Aufbaumasse, dann würde bei einem eingeschalteten Schwingungsdämpfer die Kraft des Dämpfers zusätzlich die Aufbaumasse nach oben hin beschleunigen, was das gesamte Fahrzeug zum Schwingen anregen kann. Die Aufgabe der Auswerteschaltung ist es in diesem Falle den Schwingungsdämpfer auszuschalten, daß heißt die Kraft der beschleunigten Radmasse wird auf die Federung des Fahrwerkes übertragen. Eine Übertragung auf die Aufbaumasse unterbleibt. Dieses semiaktivgeregelte Fahrwerk bietet sowohl einen wesentlich höheren Fahrkomfort als auch eine größere Fahrsicherheit.

Ein Durchschlagen des Schwingungsdämpfers wird dadurch vermieden, indem die Dämpfung kurz vor dem oberen Totpunkt auf einen höheren Dämpfungswert geschaltet wird.

Der Erfindungsgegenstand bietet somit in preiswerter Weise eine genaue Möglichkeit, die Relativgeschwindigkeit zwischen Radmasse und Aufbaumasse zu messen und mit dem äquivalenten E-Signal über die Auswerteelektronik die Dämpfungskräfte zu regeln.

Bezugszeichenverzeichnis

1) Dämpfungszylinder
2) Kolbenstange
3) Kolben
4) Befestigung
5) Trennkolben
6) Ausschlagpuffer
7) Dichtung
8) Sensorwicklung
10) Dauermagnet
11) Stecker
12) Anschlußkabel
13) Befestigung
14) Zwischenlage
15) Polschuh
16) Richtung der magnetischen Kraft
17) Dauermagnetschicht
18) Sensorwicklung
19) Verbindung
20) Filter
21) Verstärker
22) elektrische Verbindung
23) Fehlererkennung
24) elektrische Verbindung
25) elektrische Verbindung
26) Eingang Mikroprozessor
27) Eingang Mikroprozessor
28) Mikroprozessor
29) elektrische Verbindung
30) Ausgangsverstärker
31) elektrische Verbindung
32) elektrische Verbindung
33) Dauermagnet
34) neutrale Abdeckung
35) Abdeckung
36) Verschlußseite

Ansprüche

1. Schwingungsdämpfersensor zur Messung der Relativgeschwindigkeit zwischen Aufbau und Achse, für Kraftfahrzeuge, bestehend aus einem hydraulischen, regelbaren bzw. verstellbaren Schwingungsdämpfer, welcher einseitig mit dem Dämpfungszylinder an der Radaufhängung und mit der beweglichen, in dem Dämpfungszylinder eintauchenden, Kolbenstange an der Karosserie befestigt ist und einer über dem Dämpfungszylinder gestülpten einseitig offenen, der Form des Dämpfungszylinders angepaßten Abdeckung, versehen ist, die an der Kolbenstange befestigt ist und einer Auswerteschaltung, die das angeschlossene Dämpfungsventil regelt bzw. steuert, dadurch gekennzeichnet, daß die feststehende Abdeckung (35) aus einem antimagnetischen Werkstoff besteht und eine Sensorwicklung (8) enthält, deren Anschlüsse nach außen geführt werden und sichh an dem nicht eingespannten Ende des Dämpfungszylinders (1), auf der Führungsverschlußseite (36), ein Dauermagnet (10) befindet, wobei durch die Kolbengeschwindigkeiten in der Sensorwicklung (8) ein Spannungssignal nach Betrag und Richtung erzeugt wird und eine Auswerteschaltung vorhanden ist, die entsprechend der jeweiligen relativen Kolbengeschwindigkeit ein Regelsignal bzw. ein Stellsignal für das Dämpfungsventil liefert.

2. Schwingungsdämpfersensor nach Anspruch 1, dadurch gekennzeichnet, daß die Sensorwicklung (8) in Kunststoff und/oder Gummi, oder Aluminium eingebettet ist und die Abdeckung (35) darstellt.

3. Schwingungsdämpfersensor nach Anspruch 1, dadurch gekennzeichnet, daß zwischen dem Dauermagneten (10) und dem Führungsverschluß (36) des Dämpfungszylinders (1) eine antimagnetische Zwischenlage (14) vorhanden ist.

Fig. 1

Detail
A und B

13
19
12
11
6
10
36
7
2
35
8
3
5
1
4

Detail A

35

10

14

8

36

1

Fig.2

Detail B'

16

10

8

15

10

35

Fig.3

23

24

26

22

8 12

27

29 31

20

32' 25 30

12 20 21 28 Fig.6

Fig. 4

Fig. 5